# EUROPEAN PATENT SPECIFICATION

(11) **EP 2 701 562 B1**
(45) Date of publication and mention of the grant of the patent: **04.03.2015**
(21) Application number: 12712114.3
(22) Date of filing: 04.04.2012
(51) Int. Cl.: A47J 31/44, A47J 31/06, A47J 31/36, A47J 31/40, B65D 85/804

(54) **INSERT FOR USE IN A FOOD PREPARATION MACHINE**
EINSATZ ZUR VERWENDUNG BEI EINER LEBENSMITTELZUBEREITUNGSMASCHINE
INSERT DESTINÉ À ÊTRE UTILISÉ DANS UNE MACHINE DE PRÉPARATION D'ALIMENTS

(30) Priority: 29.04.2011 EP 11164347
(43) Date of publication of application: 05.03.2014
(73) Proprietor: Nestec S.A., 1800 Vevey (CH)
(72) Inventor: LEHMANN, Roland, 9200 Gossau (CH); EPARS, Yann, 1305 Penthalaz (CH); MARTIN, Vincent, 1023 Crissier (CH); WYSS, Heinz, 3672 Oberdiessbach (CH); FABOZZI, Thierry, Jean, Robert, 1201 Geneve (CH); DOGAN, Nihan, 1090 La Croix-sur-Lutry (CH); ABRAHAM, Sophie, 25160 Remoray (FR)
(74) Representative: Borne, Patrice Daniel
(86) International application number: PCT/EP2012/056131
(87) International publication number: WO 2012/146470

(56) References cited:
- WO-A1-2010/128028

## Description

### Field of the invention:

The present invention relates to an insert for use in a food preparation machine, such as a portioned capsule machine for preparing liquid food, more particularly, infant milk or gums. The invention further relates to a tool, container, food-containing capsule or capsule-holder comprising such insert.

### Background of the invention:

An intelligently designed machine may greatly facilitate the preparation of liquid food such as infant milk in a safe environment and may considerably reduce the preparation time. A solution consists in providing a capsule containing ingredients; such capsule being designed for fitting into a dedicated machine for mixing liquid with the ingredients and delivering the liquid food from the capsule into a receptacle such as a baby bottle and the like.

WO2010/128028 relates to a capsule and device for preparing a nutritional product; wherein the device comprises a fluid interface with a liquid injector and a gas injector for injecting, respectively, liquid then gas into the capsule; wherein the gas injector is spatially distant from the liquid injector or liquid inlet in the capsule. Gas, in particular compressed air, is injected in the capsule to empty the capsule from residual liquid and/or food. The separation of the gas injector from the liquid injector enables to filter the liquid for removing contaminants such as microorganisms or solid particles. The capsule may thus be designed with a filter unit comprising a liquid inlet and a gas inlet both communicating with an outlet nozzle.

A problem may be that liquid may accidentally be injected through the gas inlet. In such case, the liquid may spread over the fluid interface and may even enter into the gas injector. On the short run, it creates liquid spillage in and out the machine and, on the long run, it may also create hygiene issues as well as may damage the machine.

In particular, rinsing and/or descaling operations of the machine may create liquid spillage and/or hygiene issues.

Also, if the fluid injection side of the capsule or container is damaged, such as, the gas inlet becoming opened, liquid can flow through the gas inlet and create spillage and/or hygienic issues.

This problem may thereby occur in different configurations of the use of the machine such as when rinsing or descaling the machine or when preparing liquid food such as from a capsule or another container filled with food ingredients.

### Summary of the invention:

It is an objective of the present invention to remedy this problem with a solution that ensures that, in all configurations, liquid cannot enter in the gas injector and/or accidentally spread all over the fluid interface.

The invention is defined in the appended claims.

More particularly, the invention relates to an insert for use in a food preparation machine, the insert being adapted for being engaged by a fluid supplying interface of the machine; such interface comprising a liquid injector and a gas injector; both being transversally distant one another along the interface;
said insert comprising a fluid interface side and a fluid supply side;
the fluid interface side comprising a liquid inlet designed for fitting with the liquid injector,
the fluid supply side comprising a liquid outlet transversally distant from the liquid inlet and, a liquid passage providing communication from the liquid inlet to the liquid outlet,
wherein the insert comprises a gas injector area between the liquid inlet and the liquid outlet, wherein the insert comprises a liquid separation structure arranged for closing the liquid communication from the liquid guiding passage to the gas injector area.

In a mode, the liquid separating structure delimits gas flow means, in particular, a gas passage between a gas inlet at the fluid interface side and a gas outlet at the fluid supply side, such gas outlet being fluidically distinct from the liquid outlet. Therefore, liquid can be delivered from the machine through the insert without interacting through the insert with the gas flow means and the gas injector.

The liquid passage may comprise at least one deviation channel axially circumventing the gas injector area, such channel being delimited at least partially by said separation structure. Furthermore, the liquid separation structure is geometrically arranged for being non-perforable by the gas injector. In particular, the liquid separation structure extends both axially and transversally and is sufficiently distant from the gas injector, e.g., a gas needle, when the insert is in engagement with the fluid supply interface of the machine such that the leak-tight integrity of the separation structure is not affected, e.g., not perforated.

In a more precise embodiment, the passage comprises two deviation channels for axially circumventing the gas injection area on each side of the separation structure.

In a possible construction, the passage or channel(s) is/are at least partially open towards the fluid interface side. Such construction presents the advantage to require fewer pieces for the insert and the insert can be more easily produced by moulding such as by plastic injection or thermoforming.

The separation structure further extends transversally by a closing wall in the gas injector area. The closing wall can be arranged transversally to prevent gas flow from the fluid supply side to the fluid delivery side.

The insert is further designed such that it comprises, at the fluid interface side, at least one circumferentially closed sealing edge or surface surrounding altogether the liquid inlet, liquid outlet and liquid passage there between.

The closed sealing surface can be formed by at least one circumferentially closed sealing edge of the insert at the fluid interface side.

Furthermore, the liquid outlet preferably forms at least one protruding nozzle arranged for providing a liquid jet. In particular, the nozzle is arranged for providing a liquid jet in a direction normal or slightly inclined to the plane of extension of the fluid supply side. The jet is preferably focused within a cone angle of less than 20 degrees, most preferably less than 10 degrees.

The insert can be made of a single piece or, alternatively, of several assembled pieces. The pieces may be formed of liquid impervious, relatively rigid materials such as plastic or bio-plastic or a composite or laminate of polymer and cellulose or, polymer and aluminium. For instance, the materials are essentially made of food-grade polymer chosen amongst the group of PP, PA, PE, PA/PP, PVC, PS, PEEK, PLA, starch-based material and combinations thereof.

In a first mode, the invention relates to a rinsing and/or descaling tool comprising or consisting of an insert of the invention. For this, the insert is dimensioned to fit into the capsule holder of the machine in such a manner that its fluid interface side is engaged by the fluid supplying interface of the machine during rinsing and/or descaling operation.

In a second mode, the invention further relates to a container comprising an insert of the invention. The insert may be connected or connectable to a container designed for holding food ingredients. The container may be re-usable. For example, it can be a container for receiving food ingredients from a bulk package (e.g., a can). The container may be designed for receiving a capsule and/or a flexible pod or sachet containing food ingredients.

In a third mode, the invention relates to a single-use capsule containing a predetermined dose of food ingredients for preparing a food liquid wherein it comprises an insert of the invention. The insert may be a part of the single-use capsule. For instance, the insert may form the lid of the capsule comprising a cup-shaped body containing food ingredients. The insert may be sealed to the body such as by ultrasonic or heat welding. The lid may be further closed by a sealing membrane such as a perforable or peelable membrane. In another alternative the capsule is wrapped in a secondary package which is designed to protect the ingredients against humidity ingress and/or oxidation and/or light.

In a fourth mode, the invention relates to a capsule-holder comprising an insert of the invention. The capsule holder is originally designed for receiving a capsule containing food ingredients. The insert may be removable from the capsule holder or permanently attached, e.g., be an integral part of it.

The invention further relates to a filter unit comprising or consisting of an insert according to the invention. The filter can be formed as a casing containing a micro-porous filter membrane or another filter medium anywhere placed between the liquid inlet and liquid outlet.

The filter unit may be used in conjunction with a capsule or separately. It may for instance be a unit placed above an open container filled with food ingredients thereby making a filter interface between the machine and container. The filter may contain a filter membrane as described in WO2010/128028 or any other filtering media.

In a mode, the invention relates to a rinsing and/or descaling device comprising or consisting of an insert of the invention.

The term "food" refers to food, beverages and/or other nutritional products for human consumption.

The term "liquid food" means any food composition having a generally liquid texture but not necessarily fully liquid (e.g. possibly containing solid particles in suspension in the liquid). The "food ingredients" means a liquid concentrate, powder, agglomerates, granules, crystals, a gel, leaves or leaf fragments, and combinations thereof for preparing the liquid food in combination with liquid such as water. In particular, the food ingredients cover infant formula, growing-up formula, gums, adult nutrition formula, dairy based ingredients, a culinary composition or any suitable food including proteins, lipids, carbohydrates, micronutrients, optionally fibers and combinations thereof.

The invention further relates to the use of an insert in a food preparation machine as described in the present application. The invention further relates to the combination of an insert and a food preparation machine.

### Brief description of the drawings:

Fig. 1 shows a detailed cross-section view of the head of a food preparation machine with a capsule inside;
Fig. 2 shows an insert according to a first embodiment of the invention, in particular, a rinsing/descaling tool in rear perspective;
Fig. 3 shows the insert of fig. 2 in front perspective,
Fig. 4 shows a bottom planar view of the insert of fig. 2;
Fig. 5 shows the insert of fig. 2 in bottom perspective;
Fig. 6 shows the insertion of the insert in the capsule holder of the machine of fig. 1;
Fig. 7 shows a top, partially cut view of an assembly comprising a rinsing/descaling tool in a capsule holder and in engagement with the fluid supply interface of the food preparation machine;
Fig. 8 shows a cross-section view of the insert of fig. 4 along plane A-A when in fluid engagement against the fluid supply interface of the machine of fig. 1;
Fig. 9 shows a top view of an insert according to a second embodiment;
Fig. 10 shows a bottom view of the insert of fig. 9;
Fig. 11 shows a cross-section view along plane B-B of the insert of fig.9 in fluid engagement against the fluid supply interface of the machine of fig. 1;
Fig. 12 shows a top view of an insert according to a third embodiment;
Fig. 13 shows a top view of an insert according to a fourth embodiment;
Fig. 14 shows a cross-section view along plane B-B of the insert of fig. 13 in fluid engagement against the fluid supply interface of the machine of fig. 1;
Fig. 15 shows a top view of an insert according to a fifth embodiment;
Fig. 16 shows a cross-section view along plane B-B of the insert of fig. 15 in fluid engagement against the fluid supply interface of the machine of fig. 1;
Fig. 17 shows a top view of an insert according to a sixth embodiment;
Fig. 18 shows a cross-section view along plane B-B of the insert of fig. 17;
Fig. 19 shows a plane view of the insert along plane C-C of fig. 18;
Fig. 20 shows a cross-section view along plane B-B of the insert of fig. 17 in fluid engagement against the fluid supply interface of the machine of fig. 1;
Fig. 21 shows in cross section a single-use capsule with an insert of the invention;
Fig. 22 shows in cross section a single-use capsule with an insert of the invention in a variant of fig. 21;
Fig. 23 illustrates an insert in conceptual representation;
Fig. 23a represents a single-use capsule with an insert of the invention;
Fig. 23b represents a capsule holder with an insert and a single-use capsule positioned in the capsule holder;
Fig. 23c represents a container for receiving food ingredients with an insert of the invention.

### Detailed description of the drawings:

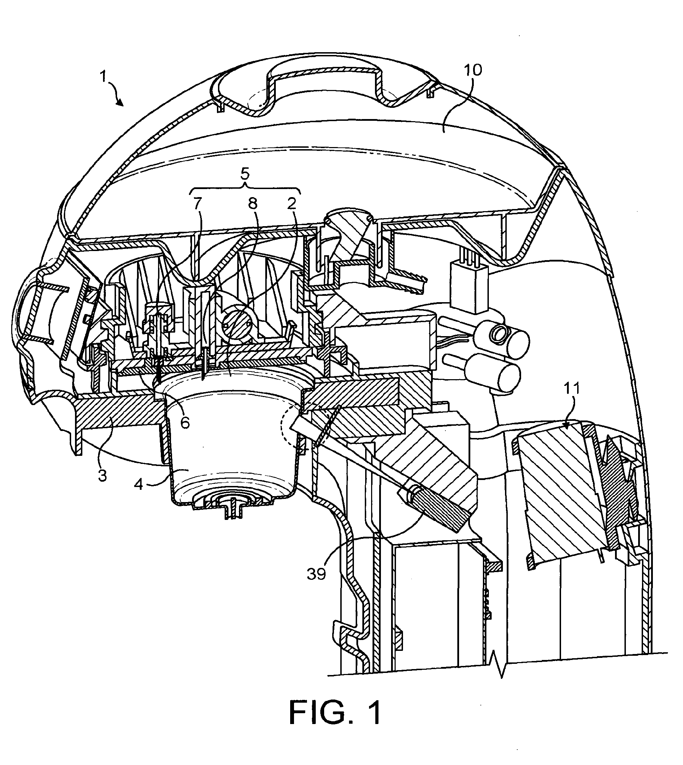

A food preparation machine 1 is illustrated on fig. 1. The machine typically comprises a housing 2 for receiving a capsule holder 3. The capsule holder may be partially or fully removable from the housing. The capsule holder comprises a seat for receiving a single-use capsule 4 or any other container which can be filled with food ingredients. In the present case, the capsule holder is configured as a drawer to be inserted in the housing along guiding means of the machine (not shown) such as described in co-pending European patent application No.11152739.6 entitled: "Beverage production machine comprising features to facilitate capsule loading".

The housing further comprises a fluid supplying interface 5. The interface may comprise a plate 6 made of or covered partially or fully by rubber or silicone material. The fluid supplying interface 5 comprises a liquid injector 7 and a gas injector 8. The liquid injector is required for feeding an appropriate amount of liquid in the capsule or container so that liquid can mix with the food ingredients for preparing a liquid food portion such as a portion of infant milk. The liquid injector may comprise a hollow needle protruding outwardly from the plate to be able to perforate, if necessary, a sealing foil of the capsule or container. The liquid injector is thus supplied with liquid by a liquid reservoir 10. Liquid is supplied to the injector after being warmed in a heater (not shown) and is pressurized by a pump 11. The gas injector 8 is arranged to supply gas into the capsule or container in order to empty it from the liquid food, in particular, once the liquid supply is stopped. Gas it typically compressed gas provided by an air pump or a compressed-gas cartridge in the machine (not shown). The gas injector may also comprise a hollow needle protruding from the plate or be a simple hole. The liquid and gas injectors are axially distant one another at the fluid supplying interface. Such distance is preferred to be able to have the liquid injector be located close to the front of the housing.

The fluid supply interface 5 can be moved from the capsule holder loading position to the liquid/gas feeding position by mechanical and/or motorized activating means (not shown).

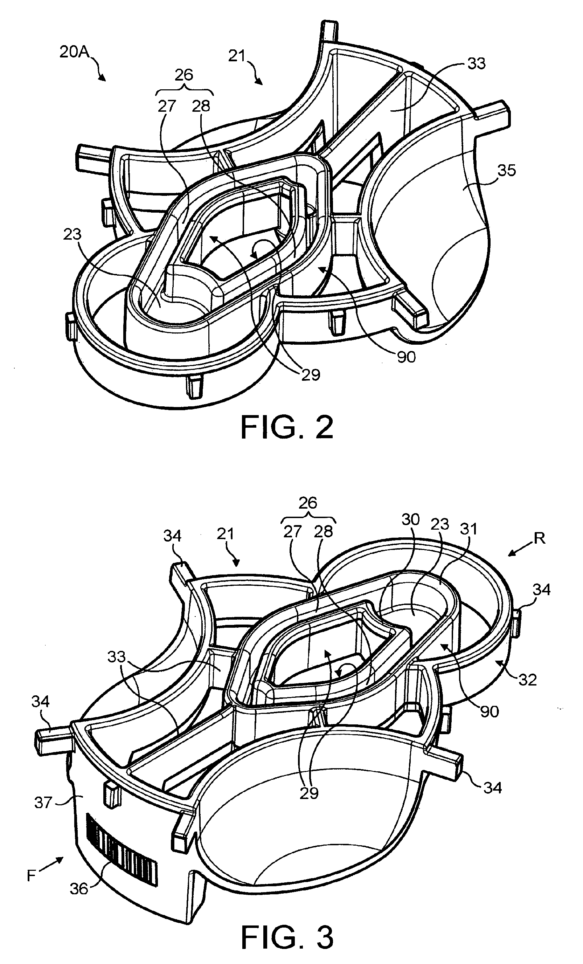

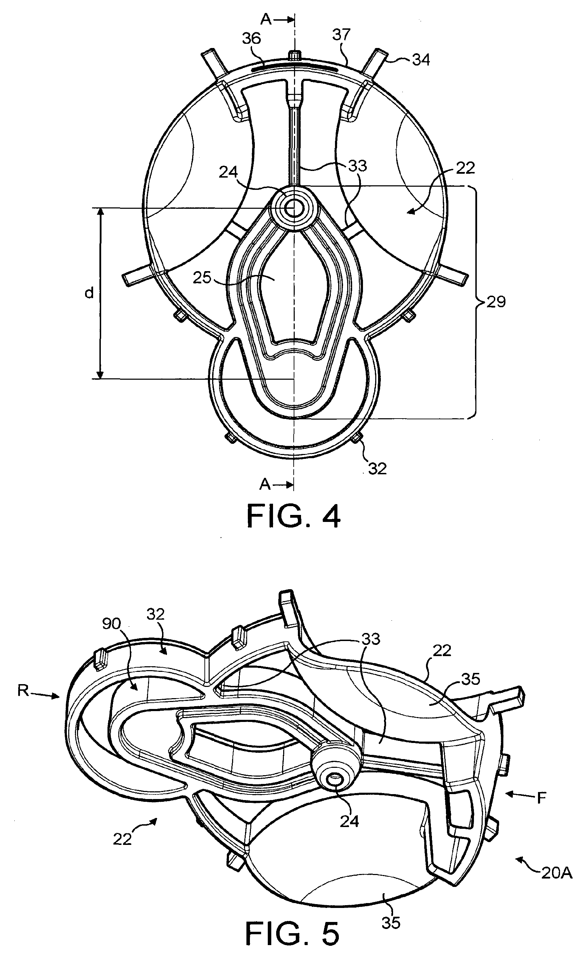

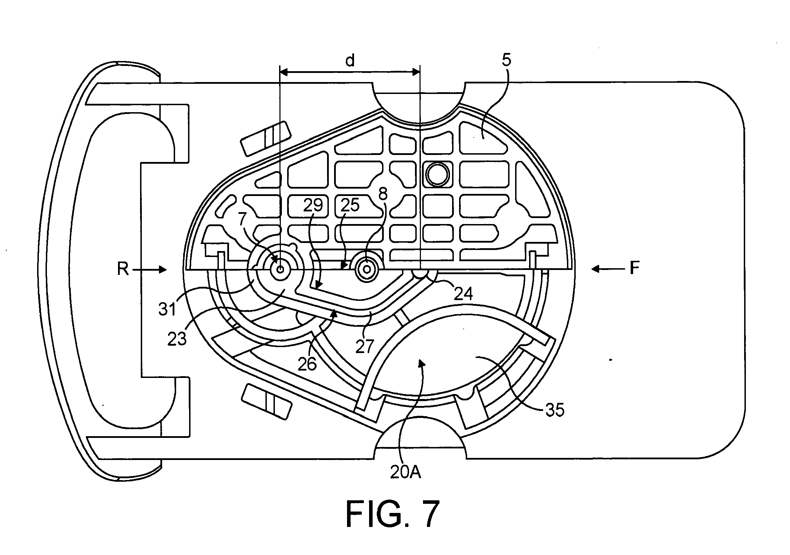

Figs. 2 to 8 illustrate a first mode of the insert of the invention. The insert 20A is designed for being engaged by the fluid supplying interface 5. The insert comprises a fluid interface side 21 intended to be engaged by the fluid supplying interface and, at the opposite, a fluid supply side 22 intended to supply fluid in a capsule, a container or directly through the capsule holder. The fluid interface side 21 comprises a liquid inlet 23, forming a small reservoir. The fluid supply side 22 comprises a liquid outlet 24 which may form a protruding nozzle with one orifice or several small orifices. The liquid inlet and outlets are axially distant (distance "d" shown in figs. 4 or 7) so that it is possible to better support the insert against the pressure of injected liquid, in particular, to reinforce the support of the inlet of the insert in the capsule holder. The term "axially" refers to a direction which is normal to the direction of the plane along which the interface side 21 of the insert generally extends. The term "transversally" refers to same direction as the direction of said plane.

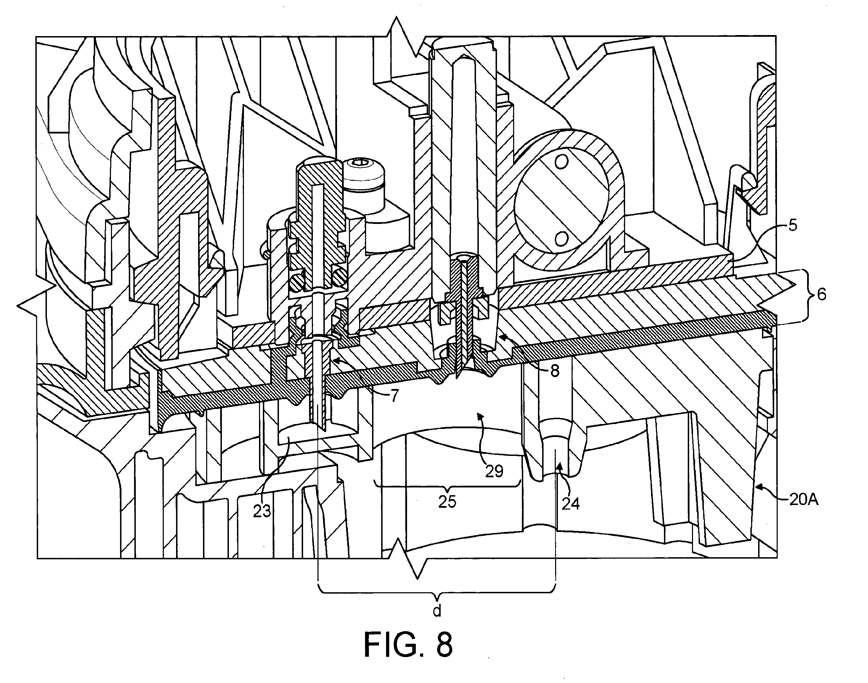

The insert is shaped and dimensioned in order to define when in engagement with the fluid interface 5 of the machine, a gas injector area 25 (fig. 8). The gas injector area 25 represents the area of the insert at its fluid supply side 21 which is adjacent and encompasses the gas injector 8 of the machine. The insert further comprises a liquid guiding passage 26 which comprises two deviation channels 27, 28 on each side of a separation structure 29 which is arranged for closing the liquid communication between the liquid passage 26 and the gas injector area 25. In other words, when liquid is injected in the liquid inlet 23, liquid flows through the channels 27, 28 but is prevented from entering the gas injector area 25 thanks to the separation structure 29. The separation structure 29 can form two U-shaped channels which merge, on one side, to the reservoir of the inlet 23 and, on the other side, to the liquid outlet 24 or nozzle. The channels can thus open towards the fluid interface side. The separation structure, the inlet reservoir and the channels are generally demarcated by an inward frame of walls 90 joining the two sides of the insert. Furthermore a sealing edge 31 is present which surrounds the liquid inlet, liquid outlet and passage altogether. The sealing edge 31 may also be part of the inward frame 90 and be connected by an outward frame 32 which is designed to fit into the seat of the capsule holder of the machine.

In operation, when the insert is engaged by the fluid supplying interface of the machine as shown in figure 8, the liquid injector 7 extends in axial direction in the liquid inlet 23 of the insert. The gas injector 8 becomes positioned adjacent and axially aligned above the gas injector area 25 of the insert, in the present case, this area 25 being materialized by a through-hole 40 demarcated by the separation structure 29 of the insert. The separation structure 29 and the inward frame 90 engage against the fluid supply interface 5 in a liquid tight manner so that liquid is channelled from the inlet to the outlet via the passage 26 or channels without possibility of communicating with the gas injector 8 and through-hole 40. In particular, the top edges 30, 31 of the insert are engaged by a rubbery outer surface of the plate 6 of the interface to ensure a liquid-tight seal engagement. The top edge could also be soft enough such as made of arubber or silicone layer.

If necessary, during operation of the machine (such as during a rinsing or capsule emptying steps etc.), compressed gas can be flushed through the insert in the direction of the capsule holder. The gas flushing may perform different functions such as emptying liquid food residue,from the capsule or drying the surfaces of the capsule holder after the rinsing operation.

The inward and outward frames 90, 32 can be connected by a series of connecting walls 33. The outward frame 32 may further extend outwardly by small positioning walls or studs 34. The frame 32 may further be designed on the lateral sides of the insert with a pair of curved walls 35 for facilitating handling of the insert, such as its insertion and removal from the capsule holder 3.

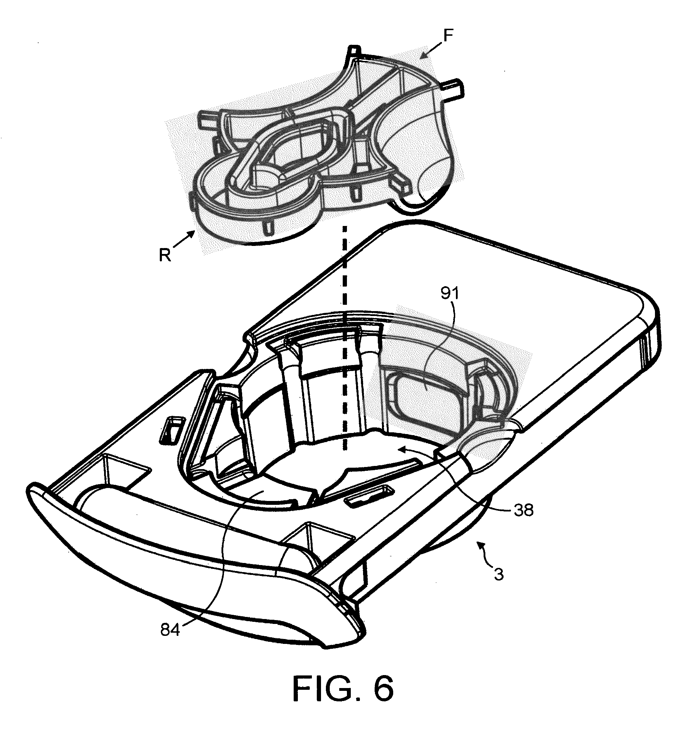

The insert of the invention may be provided with an optical identification means 36, such as a barcode. The optical identification means is preferably positioned on the front wall 37 of the front side "F" of the insert as opposed to its rear side "R" (figure 6). The insert can fit into a seat 38 of the capsule holder 3 in such manner that the optical identification means 36 of the insert becomes aligned with a window 91 or an equivalent clearance through the capsule holder. In the loading position of the capsule holder in the housing of the machine, the optical identification means 36 becomes readable through the window or clearance by an optical reading device such as an IR optical reader 39 (figure 1). As a result, the machine can be programmed to carry out a use cycle which is specific to the insert. When the insert is a rinsing and/or descaling tool, a rinsing or descaling program is activated. For example, the machine set the heater to warm the liquid at an optimal rinsing and/or descaling temperature.

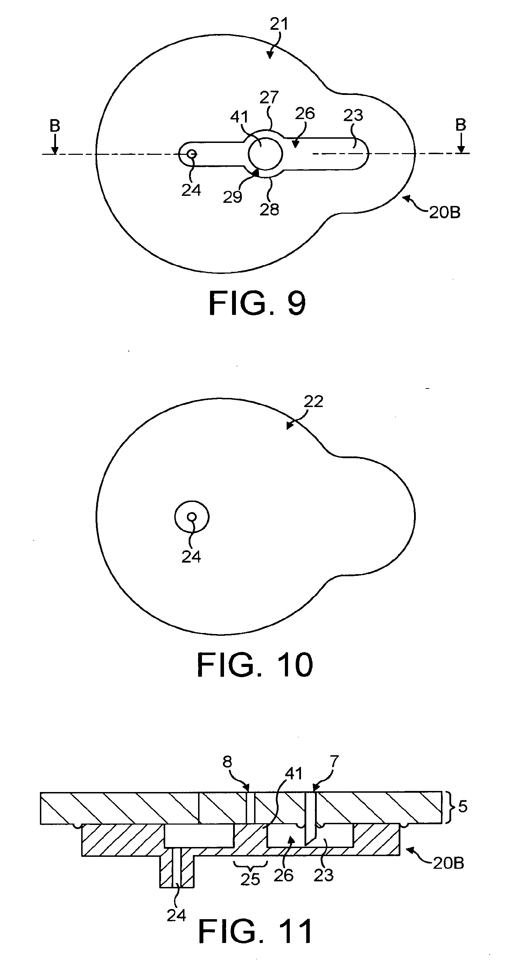

Figures 9 to 11 illustrate a second possible embodiment of the insert. The insert 20B is formed here as a plate structure rather than a frame structure of the preceding embodiment. However, the insert 20B also comprises a fluid interface side 21 (fig. 9) and a fluid supply side 22 (fig. 10). On its fluid interface side 21, an axial liquid inlet 23 is present in the area of the liquid injector which extends transversally by a transversal liquid passage 26 which divides itself into two channels 27, 28 running around a central plain closing wall 41. The closing wall 41 is positioned in the gas injector area 25 of the insert so as to block the flow path of liquid from the transversal passage 26 to the gas injector. It also blocks gas at the gas outlet of the interface. Therefore, it can be understood that the closing wall 41 takes the representation of a plain cylindrical member which forms the separation structure 29 for the liquid. Downstream of the channels, an axial liquid outlet 24 is provided which may protrude at the fluid delivery side in the shape of a nozzle. The insert 20B can be moulded in one integral piece such as in plastic or biodegradable polymer.

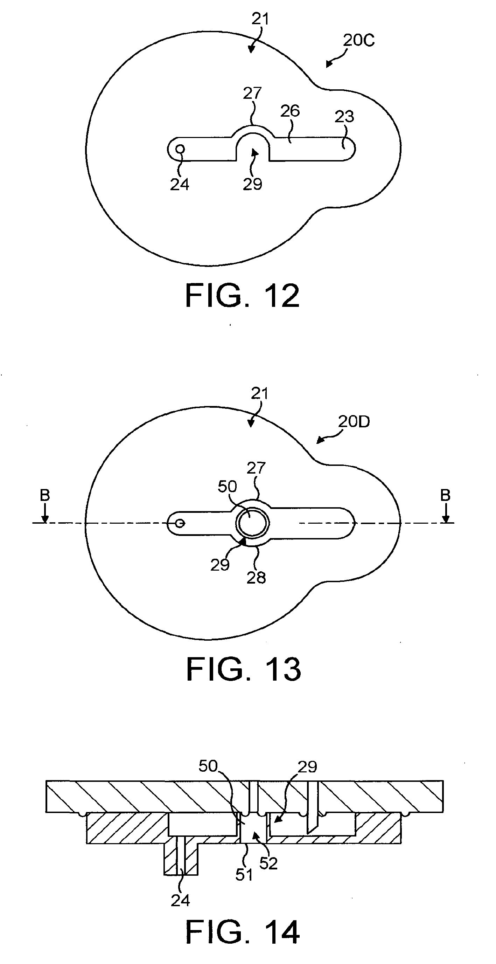

Fig. 12 illustrates a variant of the insert of figs. 9 and 10 in which the insert 20C has a passage 26 which deviates from the gas area by a single channel 27. In such case, the separation structure 29 is formed by a concave extension in the gas injector area and delimiting the concave side of the channel 27.

Fig. 13 illustrates another insert 20D which has a tubular separation structure 29 placed in the gas injector area. The structure 29 extends axially from the bottom of the insert. Two deviation channels 27, 28 run on each side of such separation structure. The tubular separation structure defines a gas passage 52 between a gas inlet 50 on the fluid interface side and a gas outlet 51 on the fluid supply side.

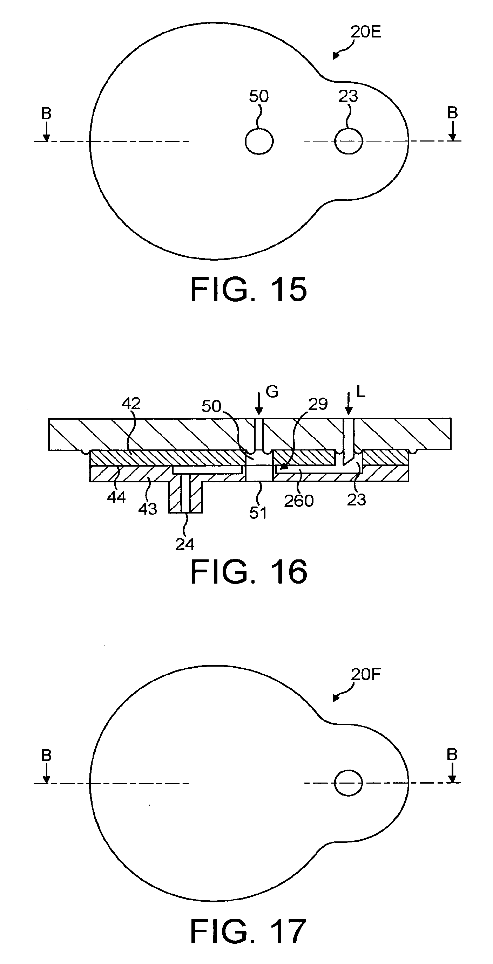

Figs. 15 and 16 illustrate another insert 20E which is formed in two assembled members 42, 43 along a transversal partition plane 44. A liquid inlet 23 and gas inlet 50 are thus obtained in the top or fluid interface member 42 and a gas outlet 51 and liquid outlet 24 are obtained in the bottom or fluid supply member 43. The transversal passage 26 (channels) is obtained by the conjunction of the two members 42, 43.

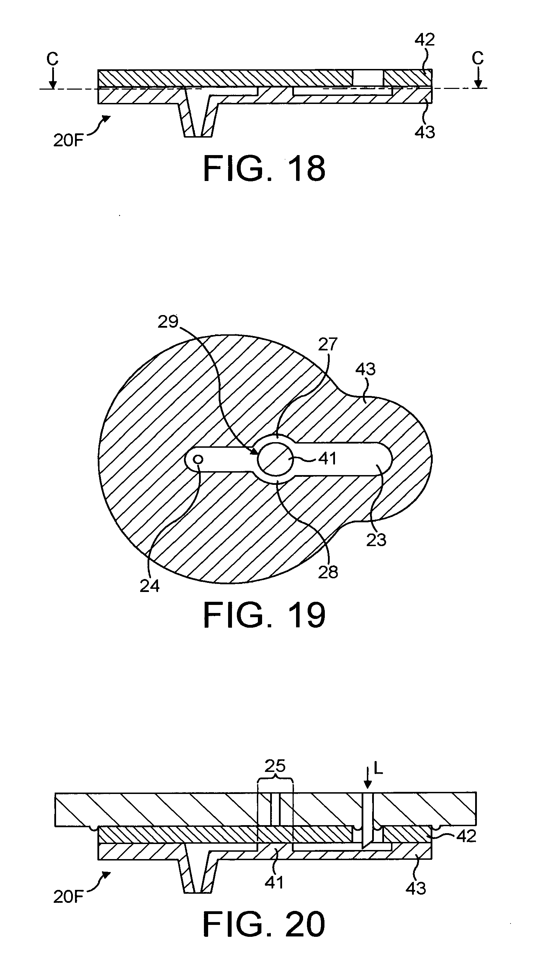

Figs. 17 and 18 illustrate another insert 20F which is a variant of insert 20E. In this case, the insert is also formed by two members 42, 43 but there is no gas inlet. The bottom or fluid supply member 43 extends axially by a closing wall 41 forming the separation structure 29 and being positioned in the gas injector area 25.

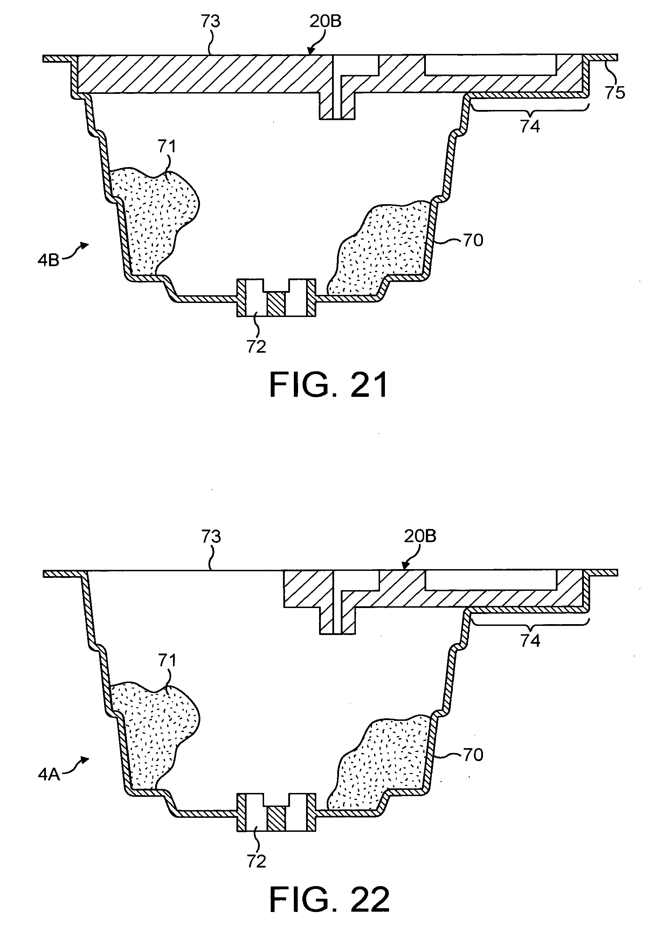

Fig. 21 illustrates a single-use capsule comprising a cup-shaped body 70 containing food ingredients 71, such as infant milk powder and an insert such as insert 20B of figures 9 and 10. The body is delimited by a flange 75 and has a bulged extension at a side thereby forming a seat 74 and making the capsule asymmetrical. It should be noticed that any other insert disclosed in the present application can replace the shown one. The insert can be dimensioned to completely cover the mouth of the body. The bulged part of the insert can be housed in a seat 74 of the body. The seat 74 forms a bulge portion which fits with a lowered bulged support surface 84 of the capsule holder (fig. 6). The representation of the thickness of the insert is also not essential. Parts of the insert may also be flexible and other parts may be more rigid. In the bottom of the body, a food outlet 72 is present. On top or below the outlet, can be placed a delivery system such a membrane that breaks under the effect of pressure or a filter (not shown). The insert may be covered by a sealing membrane 73. The sealing membrane covers the liquid inlet (optionally gas inlet) and the passage of the insert. The membrane is sealed on the flange 75 of the body such as by heat or ultrasounds. The membrane is perforable by the liquid injector of the machine when the fluid supply interface is engaged against the capsule. In an alternative, the capsule can be wrapped in a secondary package such as a flexible pouch such as made of a laminate of polymer preferably including a gas barrier (not shown).

Fig. 22 illustrates a variant of the capsule of fig. 21 in which the insert 20B occupies only a part of the surface area of the mouth of the body. A bulged part of the insert is here inserted into the bulged seat 74. However, part of the mouth of the body remains uncovered by the insert. Therefore, preferably, a sealing membrane 73 closes both the mouth of the body and the insert. It can be sealed onto the flange 75 of the body.

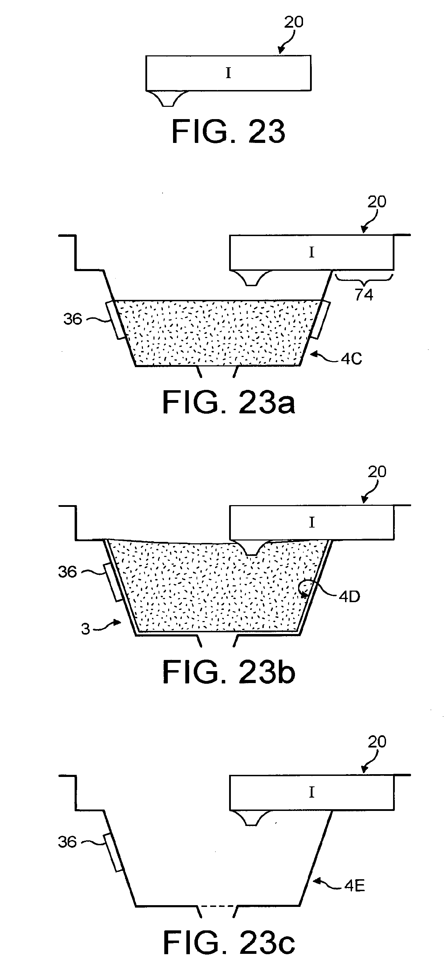

Figs. 23, 23a, 23b, 23c illustrate the different possible uses of the insert 20 (20A-20F) of the invention and so represent other objects of the present invention.

Fig. 23 illustrates any insert of the invention as described in the present application.

Fig. 23a represents a single-use capsule 4C comprising the insert 20 such as one lodged into a bulged seat 74 of the capsule. An optical identification means 36, e.g., a barcode, is located on the front side wall of the capsule such as described in co-pending EP10190899.4.

Fig. 23b represents a capsule holder 3 including a capsule 4D which is separate from the insert 20. The capsule contains a dose of food ingredients such as infant milk powder, growing-up milk powder or gums. It can be sealed or open. It may be made of flexible, rigid or semi-rigid packaging material. An optical identification means, e.g., barcode 36 may be located on the front side wall of the capsule holder or alternatively on the front side wall of the capsule 4D if the capsule holder has a window or clearance in alignment with the identification means when the capsule is operationally in place in the capsule holder.

Fig. 23c represents a container 4E with an insert 20. The insert 20 may be fixed or connected such as by a pivot to the container. It may also be fixed in a removable manner from the container such as by a press-fitting engagement in the bulged seat of the container. For example, the insert can be a filter unit for removing contaminants from the injected liquid supplied to the container. The container is adapted to be filled with food ingredients such as infant milk powder, growing-up milk powder or gum from a bulk package. The container can be sized and dimensioned to fit into the capsule holder 3. In an alternative it may be sized and dimensioned with guiding means to replace the capsule holder. An optical identification means, e.g., barcode 36 may be located on the front side wall of the container.

## Claims

1. Insert (20, 20A-20d) for use in a food preparation machine, the insert being adapted for being engaged by a fluid supplying interface (5) of the machine; such interface comprising a liquid injector (7) and a gas injector (8); both being transversally distant one another along the interface;
said insert comprising a fluid interface side (21) and a fluid supply side (22);
the fluid interface side (21) comprising a liquid inlet (23) designed for fitting with the liquid injector (7),
the fluid supply side (22) comprising a liquid outlet (24) transversally distant from the liquid inlet (23) and,
a liquid passage (26) providing liquid communication from the liquid inlet (23) to the liquid outlet (24),
wherein the insert comprises a gas injector area (25) between the liquid inlet and the liquid outlet,
wherein the insert (20, 20A-20d) comprises a liquid separation structure (29) arranged for closing the liquid communication from the liquid passage (26) to the gas injector area (25).

2. Insert according to claim 1, wherein the liquid separation structure (29) delimits a gas passage (52) between a gas inlet (50) at the fluid interface side communicating with a gas outlet (52) at the fluid supply side, such gas outlet (51) being fluidically distinct from the liquid outlet (24).

3. Insert according to claims 1 or 2, wherein said liquid passage (26) comprises at least one deviation channel (27, 28) axially circumventing the gas injector area, such channel being delimited at least partially by said separation structure (29).

4. Insert according to claim 3, wherein the liquid passage (26) comprises two deviation channels (27, 28) on each side of the separation structure (29).

5. Insert according to claims 3 or 4, wherein the deviation channel(s) (27, 28) is/are at least partially open towards the fluid interface side (21).

6. Insert according to claim 1, wherein the separation structure (29) further extends transversally by a closing wall (41) in the gas injector area (25).

7. Insert according to any of the preceding claims, wherein it comprises at the fluid interface side (21), at least one circumferentially closed sealing edge or surface (31) surrounding altogether the liquid inlet (23), the liquid outlet (24) and the liquid passage (26) there between.

8. Insert according to claim 7, wherein the closed sealing surface can be formed by at least one circumferentially closed sealing edge or surface (31) at the fluid interface side.

9. Insert according to any of the preceding claims, wherein the liquid outlet (24) forms at least one protruding nozzle for providing a liquid jet in a direction normal or slightly inclined to the plane of extension of the fluid supply side (22).

10. Insert according to any of the preceding claims, wherein it is made of a single piece such as made of material of plastic or biodegradable polymer.

11. Insert according to any of the preceding claims 1 to 9, wherein it is made of several assembled pieces.

12. Rinsing and/or descaling tool comprising or consisting of an insert (20, 20A-20F) according to any of the preceding claims.

13. Container (4E) comprising an insert (20, 20A-20F) according to any of the preceding claims 1 to 12.

14. Single-use capsule (4A, 4B, 4C) containing a predetermined dose of food ingredients for preparing a food liquid wherein it comprises an insert (20, 20A-20F) according to any of the preceding claims 1 to 11.

15. Capsule-holder (3) comprising an insert according to any of the preceding claims 1 to 12.

16. Filter unit comprising or consisting of an insert (20, 20A-20F) according to any of the preceding claims 1 to 11.

## Patentansprüche

1. Einsatz (20, 20a- 20d) zur Verwendung in einer Nahrungszubereitungsmaschine, wobei der Einsatz dazu ausgelegt ist, um mit einer Fluidbereitstellungsschnittstelle (5) der Maschine in Eingriff zu treten, wobei die Schnittstelle ein Flüssigkeitseinspritzelement (7) und ein Gaseinspritzelement (8) aufweist, die beide voneinander transversal an der Schnittstelle beabstandet sind,
wobei der Einsatz eine Fluidschnittstellenseite (21) und eine Fluidbereitsstellungsseite (22) aufweist,
wobei die Fluidschnittstellenseite (21) einen Flüssigkeitseinlass (23) aufweist, der zum Anschluss mit dem Flüssigkeitseinspritzelement (7) bemessen ist, wobei die Fluideinlassseite (22) einen Flüssigkeitsauslass (24), der transversal von dem Flüssigkeitseinlass (23) beabstandet ist, und
einen Flüssigkeitsdurchlass (26) aufweist, der eine Flüssigkeitsverbindung von dem Flüssigkeitseinlass (23) zu dem Flüssigkeitsauslass (24) schafft,
wobei der Einsatz eine Gaseinspritzfläche (25) zwischen dem Flüssigkeitseinlass und dem Flüssigkeitsauslass aufweist,
wobei der Einsatz (20, 20a - 20d) eine Flüssigkeitstrennstruktur (29) aufweist, die angeordnet ist, um die Flüssigkeitsverbindung von dem Flüssigkeitsdurchlass (26) zu der Gaseinspritzfläche (25) zu schließen.

2. Einsatz nach Anspruch 1, bei dem die Flüssigkeitstrennstruktur (29) einen Gasdurchlass (52) zwischen einem Gaseinlass (50) an der Flüssigkeitsschnittstellenseite abgrenzt, der mit einem Gasauslass (52) an der Flüssigkeitsbereitstellungsseite kommuniziert, so dass der Gasauslass (51) fluidmäßig von dem Flüssigkeitsauslass (24) getrennt ist.

3. Einsatz nach Anspruch 1 oder 2, bei dem der Flüssigkeitsdurchlass (26) wenigstens einen Umgehungskanal (27, 28) aufweist, der axial die Gaseinspritzfläche umgeht, so dass der Kanal zumindest teilweise durch die Trennstruktur (29) abgegrenzt ist.

4. Einsatz nach Anspruch 3, bei dem der Flüssigkeitsdurchlass (26) zwei Umgehungskanäle (27, 28) an den beiden Seiten der Trennstruktur (29) aufweist.

5. Einsatz nach einem der Ansprüche 3 oder 4, bei dem die Umgehungskanäle bzw. der Umgehungskanal (27, 28) wenigstens teilweise in Richtung der Fluidschnittstellenseite (21) offen sind/ist.

6. Einsatz nach Anspruch 1, bei dem die Trennstruktur (29) sich weiterhin transversal mittels einer Verschlusswand (41) in den Gaseinspritzbereich (25) erstreckt.

7. Einsatz nach einem der vorhergehenden Ansprüche, weiterhin aufweisend, an der Fluidschnittstellenseite (21), wenigstens eine umfangsmäßig geschlossene Dichtkante oder Dichtfläche (31), die den Flüssigkeitseinlass (23), den Flüssigkeitseinlass (24) und den dazwischen liegenden Flüssigkeitsdurchlass (26) einschließt.

8. Einsatz nach Anspruch 7, bei dem die geschlossene Dichtfläche durch wenigstens eine umfangsmäßig geschlossene Dichtkante oder Dichtfläche (31) an der Fluidschnittstellenseite gebildet sein kann.

9. Einsatz nach einem der vorhergehenden Ansprüche, bei dem der Flüssigkeitsauslass (24) wenigstens eine vorstehende Düse zur Bereitstellung eines Flüssigkeitsjets in einer Richtung bildet, die senkrecht oder leicht geneigt zu der Ebene liegt, in der sich die Flüssigkeitszufuhrseite (22) erstreckt.

10. Einsatz nach einem der vorhergehenden Ansprüche, der aus einem einzigen Stück und bspw. aus einem Plastikmaterial oder einem biodegradablen Polymer geformt ist.

11. Einsatz nach einem der Ansprüche 1 - 9, der aus mehreren zusammengesetzten Teilen gebildet ist.

12. Reinigungs- und/oder Entkalkungswerkzeug, aufweisend oder bestehend aus einem Einsatz (20, 20a - 20f) nach einem der vorhergehenden Ansprüche.

13. Behälter (4e) aufweisend einen Einsatz (20, 20a - 20f) nach einem der vorhergehenden Ansprüche 1 - 12.

14. Wegwerfkapsel (4a, 4b, 4c) enthaltend eine vorbestimmte Portion einer Nahrungszutat zur Zubereitung einer flüssigen Nahrung, aufweisend einen Einsatz (20, 20a - 20f) nach einem der vorgehenden Ansprüche 1 - 11.

15. Kapselhalter(3) aufweisend einen Einsatz nach einem der vorhergehenden Ansprüche 1 - 12.

16. Filtereinheit aufweisend oder bestehend aus einem Einsatz (20, 20a - 20f) nach einem der vorgehenden Ansprüche 1 - 11.

## Revendications

1. Insert (20, 20A-20d) pour une utilisation dans une machine de préparation de nourriture, l'insert étant adapté pour être en prise avec une interface d'approvisionnement de fluide (5) de la machine ; ladite interface comprenant un injecteur de liquide (7) et un injecteur de gaz (8) ; les deux étant transversalement éloignés l'un de l'autre le long de l'interface ;
ledit insert comprenant un côté d'interface de fluide (21) et un côté d'approvisionnement de fluide (22) ;
le côté d'interface de fluide (21) comprenant une entrée de liquide (23) conçue pour correspondre à l'injecteur de liquide (7),
le côté d'approvisionnement de fluide (22) comprenant une sortie de liquide (24) transversalement éloignée de l'entrée de liquide (23) et,
un passage de liquide (26) procurant une communication de liquide de l'entrée de liquide (23) à la sortie de liquide (24),
dans lequel l'insert comprend une zone d'injection de gaz (25) entre l'entrée de liquide et la sortie de liquide,
dans lequel l'insert (20, 20A-20d) comprend une structure de séparation de liquide (29) agencée pour fermer la communication de liquide du passage de liquide (26) à la zone d'injection de gaz (25).

2. Insert selon la revendication 1, dans lequel la structure de séparation de liquide (29) délimite un passage de gaz (52) entre une entrée de gaz (50) sur le côté d'interface de fluide communiquant avec une sortie de gaz (51) sur le côté d'approvisionnement de fluide, ladite sortie de gaz (51) étant fluidiquement distincte de la sortie de liquide (24).

3. Insert selon les revendications 1 ou 2, dans lequel ledit passage de liquide (26) comprend au moins un canal de déviation (27, 28) contournant axialement la zone d'injection de gaz, ledit canal étant délimité au moins partiellement par ladite structure de séparation (29).

4. Insert selon la revendication 3, dans lequel le passage de liquide (26) comprend deux canaux de déviation (27, 28) de chaque côté de la structure de séparation (29).

5. Insert selon les revendications 3 ou 4, dans lequel le(s) canal/canaux de déviation (27, 28) est/sont au moins partiellement ouvert(s) vers le côté d'interface de fluide (21).

6. Insert selon la revendication 1, dans lequel la structure de séparation (29) s'étend en outre transversalement par une paroi de fermeture (41) dans la zone d'injection de gaz (25).

7. Insert selon l'une quelconque des revendications précédentes, comprenant sur le côté d'interface de fluide (21) au moins un bord ou une surface (31) d'étanchéité fermé circonférentiellement qui entoure entièrement l'entrée de liquide (23), la sortie de liquide (24) et le passage de liquide (26) entre ceux-ci.

8. Insert selon la revendication 7, dans lequel la surface d'étanchéité fermée peut être formée par au moins un bord ou une surface (31) d'étanchéité, fermé circonférentiellement, sur le côté d'interface de fluide.

9. Insert selon l'une quelconque des revendications précédentes, dans lequel la sortie de liquide (24) forme au moins une buse faisant saillie pour fournir un jet de liquide dans une direction perpendiculaire ou légèrement inclinée par rapport au plan d'extension du côté d'approvisionnement de fluide (22).

10. Insert selon l'une quelconque des revendications précédentes, qui est réalisé en une seule pièce, par exemple réalisé en matériau de plastique ou polymère biodégradable.

11. Insert selon l'une quelconque des revendications précédentes 1 à 9, qui est constitué de plusieurs pièces assemblées.

12. Outil de rinçage et/ou de détartrage comprenant ou consistant en un insert (20, 20A-20F) selon l'une quelconque des revendications précédentes.

13. Récipient (4E) comprenant un insert (20, 20A-20F) selon l'une quelconque des revendications précédentes 1 à 11.

14. Capsule à usage unique (4A, 4B, 4C) contenant une dose prédéterminée d'ingrédients alimentaires pour préparer un liquide alimentaire, comprenant un insert (20, 20A-20F) selon l'une quelconque des revendications précédentes 1 à 11.

15. Support de capsule (3) comprenant un insert selon l'une quelconque des revendications précédentes 1 à 11.

16. Unité de filtre comprenant ou consistant en un insert (20, 20A-20F) selon l'une quelconque des revendications précédentes 1 à 11.
